# EUROPÄISCHE PATENTANMELDUNG

(11) **EP 0 562 542 A2**
(43) Veröffentlichungstag der Anmeldung: **29.09.1993**
(21) Anmeldenummer: 93104743.5
(22) Anmeldetag: 23.03.1993
(51) Int. Cl.: A01F 25/20

(54) **Silagegutschneidzange**

(30) Priorität: 25.03.1992 DE 9204012 U
(71) Anmelder: von der Heide, Hans, D-49479 Ibbenbüren (DE)
(72) Erfinder: von der Heide, Hans, D-49479 Ibbenbüren (DE)
(74) Vertreter: Schulze Horn, Stefan, Dipl.-Ing. M.Sc.

(57) **Zusammenfassung**

Die Erfindung betrifft eine Silagegutschneidzange (10), vorzugsweise zur Anbringung an einem Fahrzeug, mit einem in Arbeitsstellung rückwärtigen Rahmen (11), an dessen unterem Bereich eine Vielzahl von sich etwa horizontal erstreckenden Zinken (12) angebracht sind, an dessen oberem Bereich ein um eine horizontale Achse A schwenkbares Oberteil (13) angeordnet ist, wobei das Oberteil zwei Seitenwände (14, 14') und eine mit den Seitenwänden verbundene Vorderwand (15) aufweist, wobei die unteren Kanten der Seitenwände und der Vorderwand Schneidmesser (16, 17, 17', 18, 18') aufweisen, wobei das Oberteil durch eine Vorrichtung zwischen einer Offenstellung und einer Geschlossenstellung bewegbar ist, wobei in der Geschlossenstellung die Schneidmesser nahe den Zinken und der rückwärtigen Wand liegen.

Die neue Silagegutschneidzange ist dadurch gekennzeichnet, daß im Oberteil (13) mindestens ein zusätzliches Schneidmesser (19) zwischen den Seitenwänden (14, 14') etwa parallel beabstandet zum Schneidmesser (16) der Vorderwand (15) angeordnet ist.

## Beschreibung

Die Erfindung betrifft eine Silagegutschneidzange nach dem Oberbegriff des Patentanspruchs 1.

Eine derartige Silagegutschneidzange ist aus der britischen Patentanmeldung GB 2 191 992 bekannt. Sie ist vorzugsweise zur Anbringung an einen Traktor vorgesehen, weist einen hinteren Rahmen auf mit einen Boden bildenden horizontalen Zinken und einem bewegbaren vorderen Rahmen mit einer Vorderwand und Seitenwänden. Der bewegbare Rahmen ist um Lager durch einen oder mehrere Kolbenzylindereinheiten schwenkbar und die Vorderwand weist ein Schneidmesser zum Abtrennen der Silage auf. Die Seiten des bewegbaren Rahmens können ebenfalls Schneidmesser aufweisen. Das vordere Schneidmesser kann einstückig sein oder aus mehreren lösbar befestigten Schneiden bestehen. Die Schneiden können gerade, winklig oder wellenförmig sein. Die Zinken sind vorne verjüngt und können lösbar befestigt sein.

Silagegutschneidzangen dienen zum Ausschneiden von Silagegutblöcken aus Fahrsilos oder aus aufgewickelten zylindrischen Silagegutblöcken. Eine vorzugsweise an der Frontseite eines Traktors an einer für Zusatzgeräte vorgesehenen bewegbaren Halterung angebrachte Silagegutschneidzange wird in der Offenstellung in das Silagegut hineingefahren, wobei die Zinken eindringen, und dann geschlossen, wodurch der Abtrennvorgang bewirkt wird.

Wenn auch die bekannte Silagegutschneidzange vorteilhaft gegenüber früheren Vorrichtungen ist, die statt Schneidmesser Zinken aufweisen und die Silage nicht schneiden, sondern reißen, weil damit an dem verbleibenden Silagegut eine glatte Schnittfläche erzeugt wird, die übermäßiges, den Fermentationsprozeß störendes Eindringen von Luft verhindert, wird es doch als Nachteil angesehen, daß die durch die Schneidzange abgetrennte Silageportion zur weiteren Verwendung als Futtermittel von Hand mühsam zerkleinert werden muß.

Es ist die Aufgabe der Erfindung, eine Silagegutschneidzange zu schaffen, die beim Ausschneiden von Silagegutblöcken diese auch vorzerkleinert und lockert.

Die Aufgabe wird erfüllt durch eine gattungsgemäße Silagegutschneidzange mit den kennzeichnenden Merkmalen des Patentanspruchs 1.

Durch die Anordnung mindestens eines zusätzlichen Schneidmessers wird der Silagegutblock beim Ausschneiden z.B. aus Fahrsilos in mindestens zwei Abschnitte unterteilt, so daß die weitere Zerkleinerung und Lockerung zur Austragung der Silage als Futtermittel wesentlich erleichtert und vereinfacht wird.

Kleinere, gewickelte Silagegutblöcke werden bei diesem Vorgang in mindestens drei Teile zerteilt.

Vorteilhaft sind die Schneidmesser lösbar befestigt, damit die Schneidmesser leicht zum Nachschärfen ausgewechselt werden können, wobei das zusätzliche Schneidmesser auch demontiert werden kann, wenn es bei der Beschaffenheit des zu schneidenden Gutes nicht erforderlich ist.

Es hat sich auch als vorteilhaft erwiesen, daß die Schneidmesser wellenförmig geschliffen sind, weil dann die Schneidmesser leichter eindringen.

Zweckmäßig ist vorgesehen, daß die untere Kante der Seitenwände zwei etwa gerade verlaufende Abschnitte aufweise, die in einem stumpfen Winkel zueinander angeordnet sind, und daß der zur horizontalen Achse hin gelegene rückwärtige Abschnitt etwa die gleiche Länge aufweist wie die Seitenkante des rückwärtigen Rahmens, so daß in der Geschlossenstellung ein rückwärtiger Schneidmesserabschnitt nahe der Seitenkante der rückwärtigen Wand liegt. Dadurch wird ein besseres Abtrennen des Silagegutblockes an den Seiten erreicht. Hierzu ist es vorteilhaft, daß der rückwärtige Rahmen an seinen Seitenkanten zwei nach vorn abgewinkelte Abschnitte aufweist, die in der Geschlossenstellung scherenartig mit den rückwärtigen Schneidmesserabschnitten in Eingriff bringbar sind.

Vorzugsweise liegen die Vorderkanten der Schneidmesser der Vorderwand und der vorderen Abschnitte der Seitenwände in einer Ebene und die Vorderkante des zusätzlichen Schneidmessers oberhalb dieser Ebene, damit die Schneide des zusätzlichen Schneidmessers in der Geschlossenstellung nicht auf die Zinken trifft, sondern kurz davor stoppt, während das vordere Schneidmesser an den Zinkenspitzen vorbeibewegt wird.

Zweckmäßig sind in den Ecken zwischen dem Schneidmesser der Vorderwand und den Schneidmessern der Seitenwände in Richtung der Schneidmesser vorspringende Dorne angeordnet, wobei die Dorne wie Eckzähne in das Silagegut eindringen und den Trennvorgang erleichtern.

Die Bewegung zum Öffnen und Schließen der Silagegutschneidzange wird zweckmäßig von einer Vorrichtung ausgeführt, die mindestens eine strömungsmittelbetätigte Kolbenzylindereinheit aufweist, wobei sich zwei Hydraulikeinheiten in den Seiten des rückwärtigen Rahmens als vorteilhaft erweisen, deren Zylinder im untere Bereich des Rahmens angreifen, während die Kolbenstangen an einer zwischen den Seitenwänden des Oberteils angeordneten Quertraverse befestigt sind. An Traktoren im landwirtschaftlichen Einsatz ist üblicherweise ein Hydraulikagregat vorgesehen.

Eine Ausgestaltung der Erfindung wird nachfolgend anhand einer Zeichnung näher erläutert. Sie zeigt schematisch eine perspektivische Darstellung der Silagegutschneidzange.

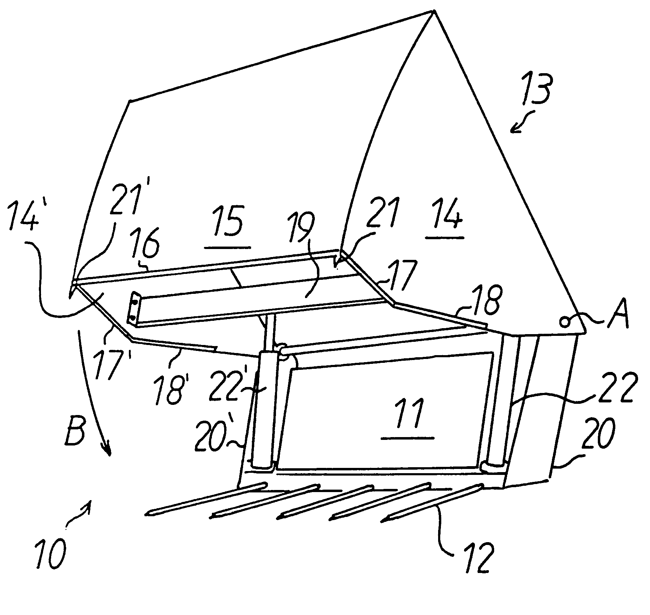

Die Zeichnung zeigt eine Silagegutschneidzange 10 mit einem rückwärtigen Rahmen 11, von dem unten mehrere Zinken 12 nach vorn ragen. In der Praxis werden zweckmäßig etwa 8 bis 15 vorn angespitzte Zinken vorgesehen, die lösbar befestigt sind.

An den Seiten des rückwärtigen Rahmens 11 sind nach vorn abgewinkelte Abschnitte 20, 20' angebracht.

Im oberen Bereich des Rahmens 11, der eine mittige Platte zur rückwärtigen Begrenzung aufweisen kann, ist eine horizontale Achse A angebracht, an der ein Oberteil 13 schwenkbar gelagert ist.

Das Oberteil 13 weist eine Vorderwand 15 und zwei damit verbundene Seitenwände 14, 14' auf, die im hinteren Bereich Lager für die Achse A tragen. Die Vorderwand 15 ist zweckmäßig so gekrümmt, daß sie einen gleichmäßigen Abstand zur Achse A aufweist, um den Schneidvorgang zu erleichtern. Die obere freie Fläche zwischen der Vorderwand 15 und den Seitenwänden 14, 14' kann zwei diagonale angebrachte Spannseile aufweisen, die das Oberteil 15 stabilisieren.

An den unteren Kanten der Vorderwand 15 und der winklig geformten Seitenwände 14, 14' sind Schneidmesser 16, 17, 17', 18, 18' angebracht, deren Schneiden in der Zeichnung nur angedeutet sind.

Zwischen den Seitenwänden 14, 14' ist parallel beabstandet zum vorderen Schneidmesser 16 lösbar ein zusätzliches Schneidmesser 19 mit zwei Montageplatten an den Stirnseiten angebracht, die beispielsweise drei Bohrungen für eine Schraubverbindung aufweisen. Das Schneidmesser 19 weist ein schlankes Profil auf.

Im unteren Bereich des Rahmens 11 sind zwei hydraulische Zylinderkolbeneinheiten 22, 22' angeordnet, deren Zylinder am Rahmen 11 angreifen, während die Kolbenstangen auf eine in der Zeichnung nicht sichtbare Quertraverse wirken, die die Seitenwände 14, 14' verbindet.

Die Silagegutschneidzange ist in der Offenstellung gezeigt, durch Betätigung der Hydraulikeinheiten 22, 22' schließt sich die Silagegutschneidzange in Richtung des Pfeiles B und schneidet das Silagegut ab und zerkleinert es durch die Wirkung des zusätzlichen Schneidmessers 19.

## Patentansprüche

1. Silagegutschneidzange (10), vorzugsweise zur Anbringung an einem Fahrzeug, mit einem in Arbeitsstellung rückwärtigen Rahmen (11), an dessen unterem Bereich eine Vielzahl von sich etwa horizontal erstreckenden Zinken (12) angebracht sind, an dessen oberem Bereich ein um eine horizontale Achse A schwenkbares Oberteil (13) angeordnet ist, wobei das Oberteil zwei Seitenwände (14, 14') und eine mit den Seitenwänden verbundene Vorderwand (15) aufweist, wobei die unteren Kanten der Seitenwände und der Vorderwand Schneidmesser (16, 17, 17', 18, 18') aufweisen, wobei das Oberteil durch eine Vorrichtung zwischen einer Offenstellung und einer Geschlossenstellung bewegbar ist, wobei in der Geschlossenstellung die Schneidmesser nahe den Zinken und der rückwärtigen Wand liegen,
**dadurch gekennzeichnet,**
daß im Oberteil (13) mindestens ein zusätzliches Schneidmesser (19) zwischen den Seitenwänden (14, 14') etwa parallel beabstandet zum Schneidmesser (16) der Vorderwand (15) angeordnet ist.

2. Silagegutschneidzange nach Anspruch 1, dadurch gekennzeichnet, daß die Schneidmesser (16, 17, 17', 18, 18', 19) lösbar befestigbar sind.

3. Silagegutschneidzange nach Anspruch 1 oder 2, dadurch gekennzeichnet, daß die Schneidmesser (16, 17, 17', 18, 18', 19) wellenförmig geschliffen sind.

4. Silagegutschneidzange nach einem der vorangegangenen Ansprüche, dadurch gekennzeichnet, daß die untere Kante der Seitenwände (14, 14') zwei etwa gerade verlaufende Abschnitte aufweist, die in einem stumpfen Winkel zueinander angeordnet sind, und daß der zur horizontalen Achse A hin gelegene rückwärtige Abschnitt etwa die gleiche Länge aufweist, wie die Seitenkante des rückwärtigen Rahmens (11), so daß in der Geschlossenstellung ein rückwärtiger Schneidmesserabschnitt (18, 18') nahe der Seitenkante der rückwärtigen Wand (11) liegt.

5. Silagegutschneidzange nach einem der vorangegangenen Ansprüche, dadurch gekennzeichnet, daß der rückwärtige Rahmen (11) an seinen Seitenkanten zwei nach vorn abgewinkelte Abschnitte (20, 20') aufweist, die in der Geschlossenstellung scherenartig mit den rückwärtigen Schneidmesserabschnitten (18, 18') in Eingriff bringbar sind.

6. Silagegutschneidzange nach einem der vorangegangenen Ansprüche, dadurch gekennzeichnet, daß die Vorderkante des Schneidmessers (16) der Vorderwand (15) und der vorderen Abschnitte (17, 17') der Seitenwände (14, 14') in einer Ebene liegen, und daß die Vorderkante des mindestens einen zusätzlichen Schneidmesseres (19) oberhalb dieser Ebene angeordnet ist.

7. Silagegutschneidzange nach einem der vorangegangenen Ansprüche, dadurch gekennzeichnet, daß in den Ecken zwischen dem Schneidmesser (16) der Vorderwand (15) und den Schneidmessern (17, 17') der Seitenwände (14, 14') in Richtung der Schneidmesser vorspringende Dorne (21, 21') angeordnet sind.

8. Silagegutschneidzange nach einem der vorangegangenen Ansprüche, dadurch gekennzeichnet, daß die Vorrichtung mindestens eine strömungsmittelbetätigte Kolben-Zylinder-Einheit (22, 22') aufweist.
